# EUROPEAN PATENT APPLICATION

(11) **EP 1 143 165 A2**
(43) Date of publication of application: **10.10.2001**
(21) Application number: 00114177.9
(22) Date of filing: 13.07.2000
(51) Int. Cl.: F16H 1/16, F16H 37/04

(54) **Speed reducer comprising a worm/worm gear first stage and an epicycloidal second stage**

(30) Priority: 03.04.2000 IT MI000705
(71) Applicant: Motovario S.p.A., 40033 Casalecchio di Reno (BO) (IT)
(72) Inventor: Coroluppi, Walter, 40012 Calderara di Reno (BO) (IT)
(74) Representative: La Ciura, Salvatore

(57) **Abstract**

Gearmotor characterised by the fact that it comprises, fitted inside the same housing (1):
an input shaft (2) with a worm;
an output shaft (3) at right angles to the input shaft (2);
an idle worm gear (5) on said output shaft engaging said worm (4);
a bushing (8) with external toothing, integral with said worm gear (5);
a series of planetary gears (10) engaging the toothing of said bushing (8) and a crown gear (13), fixed to the housing;
a support (12) of said planetary gears (10), integral with said output shaft (3).

## Description

This invention relates to a reduction gear comprising a crown gear and worm screw first stage and, connected in series, a second stage with an epicycloidal-type reduction group.

Said invention thus allows to obtain a reduction gear with a high reduction ratio and capable of transmitting a considerable power, having extremely reduced dimensions in comparison with the previously known reduction gears capable of offering similar performances.

In particular the reduction gear according to the invention comprises a first worm screw and crown gear reduction group wherein the crown gear, fitted on the output shaft, transmits the motion to a series of planetary gears which engage a fixed crown integral with the machine body and which are fitted on supports integral with said output shaft.

The dimensions of the apparatus are thus reduced thus obtaining a reduction gear capable of transmitting a considerable power together with a high reduction ratio.

According to the common technique there exist reduction gears comprising an input shaft on which a worm screw and an output shaft are fitted, at right angles to the preceding, on which it is fitted a crown gear which is engaged and slewed by said worm screw.

This reduction gear embodiment allows to reach high reduction ratios, but it is capable of effectively transmitting high powers only through large-sized crown gears, organ mainly subject to wear. The crown gear, being made of rather expensive metal, is the element which mainly weighs on the overall cost and the performances. On the other hand everybody knows the negative features of such single-stage reduction gears, that is the low efficiency.

That's why, in case of need of transmission of a certain power, usually it is necessary to use two reduction gears, connected in series by means of a shaft or other previously known mechanical connection, with the first crown gear and worm screw type reduction gear, and the second reduction gear of epicycloidal type.

Said epicycloidal type reduction gears are also already known and used in case of need of transmission of high power.

It is however manifest that this embodiment involves several problems, both from the economical point of view, since it is necessary to use two separated reduction devices and the respective connection organs, and from the point of view of the dimensions, requiring the installation of two machines and the related transmission.

The foregoing represents a problem which often limits the freedom of industrial planning of the engineers of the field and therefore there exists a need for a reduction gear with a sufficiently high reduction ratio, capable of transmitting a proper power, small-sized, and that may be supplied with slow hollow through shaft and capable of offering good efficiency.

These and other aims can be reached by the reduction gear according to the invention, which comprises a first stage including a crown gear and worm screw type reduction device, connected to a second stage including an epicycloidal type reduction gear.

All the above mentioned mechanisms are included inside the same box, thus allowing to obtain a compact and light assembly, capable of supporting high stresses.

This invention is hereinafter described in details, with references to the figures hereto annexed, in which:
figure 1 schematically shows, in section, a reduction gear according to the invention;
figure 2 is a scheme wherein the dimensions and the efficiencies of the reduction gears according to the invention are compared to those of previously known reduction gears.

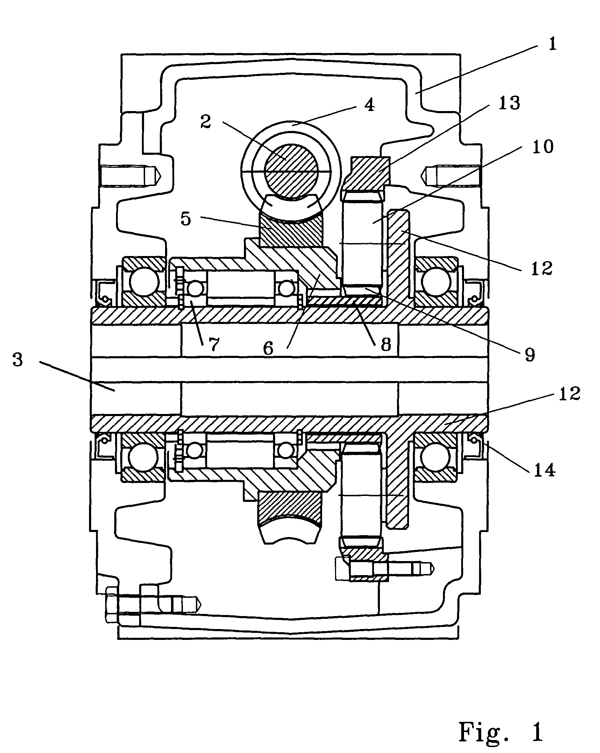

With reference to figure 1, number 1 refers to the reduction gear box according to the invention, with an input shaft 2 and an output shaft 3, being the latter preferably hollow.

On the shaft 2 is fitted a worm screw with a thread 4 which engages a corresponding thread of a crown gear 5 fitted on a support 6.

The support 6 idles around the shaft 3 which is fitted by means of bearings 7.

The support 6 engages a bushing 8 (which can be separate or can form a single body with the support 6) which is provided with an external toothing.

This toothing engages a series of planetary gears 10 fitted on supports 11, which are in turn fitted to a flange 12 integral with the output shaft 3.

The planetary gears 11 engage also an external crown gear 13, integral with the box.

A series of gaskets 14 ensures the seal between the box body 1 and the input and output shafts.

The operation is the following.

The motion, by way of example coming from an electric motor, is transmitted by means of the input shaft 2 and the worm screw 4 to the crown gear 5 which rotates around the output shaft 3 axis together with the support 6.

The support 6 can freely rotate around the shaft 3, being it fitted on the latter by means of the bearings 7.

Together with the support 6 also the bushing 8 rotates; said bushing, by means of the toothing 9, slews the planetary gears 10.

Because of the engagement of the fixed crown gear 13, the planetary gears 10 while rotating, effect also a revolution around the shaft 3 axis, thus slewing the flange 12 and the same output shaft 3.

Thus it is possible to achieve a reduction gear capable of offering together with a high power transmission, a considerable compactness.

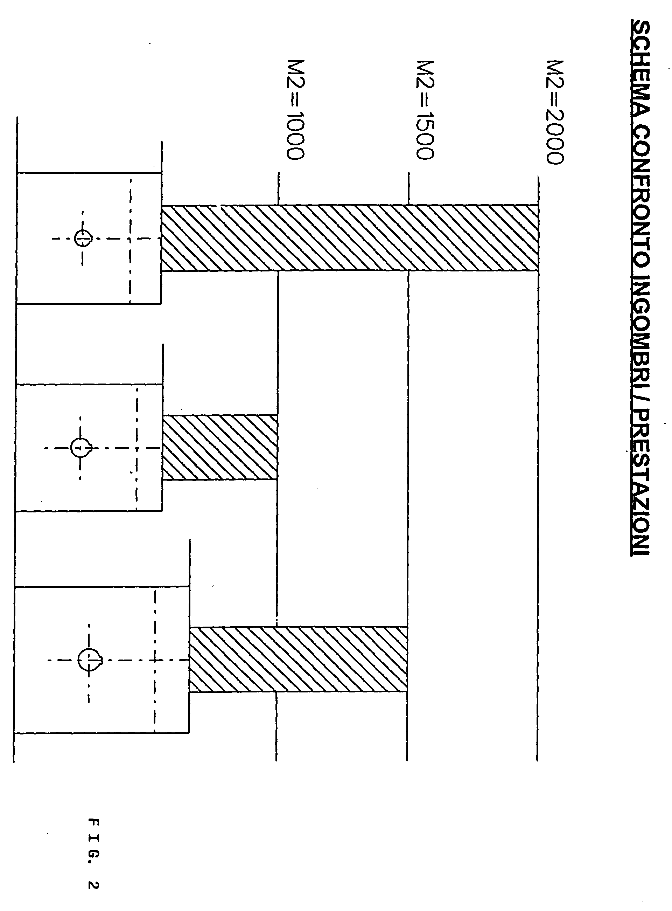

Figure 2 shows a diagram wherein the dimensions and the efficiencies of the reduction gear according to the invention are compared with a couple of reduction gears previously known.

The left lower side of the diagram reports the dimensions on a scale of a reduction gear according to the invention with a distance between centres of 110 millimetres and the respective power which said reduction gear is capable of transmitting, i.e. equal to approximately 2000 Newton/metre.

The central portion of the diagram refers to a epicycloidal reduction gear with a distance between centres of 130 millimetres which has substantially the same dimensions as the reduction gear according to the invention but which is capable of transmitting a power equal to or slightly higher than 1000 Newton/metre.

On the right side it is possible to read the data concerning a previously known crown gear and worm screw type reduction gear, with a distance between centres of 150 millimetres having larger dimensions with respect to the reduction gear according to the invention and capable of transmitting a torque equal to approximately 1500 Newton/metre.

As one can assess from the diagrams hereto annexed, the reduction gear according to the invention allows to remedy any problem and limitation noticed in the previously known reduction gears, offering the possibility to transmit high powers by means of a very small-sized reduction gear and, therefore, guaranteeing a considerable reduction in the production costs.

In comparison with the previously described embodiments, this invention offers the possibility of use of a through hollow shaft.

Other variations and modifications of the specific embodiments herein shown and described will be apparent to those skilled in the art within the scope of the invention.

## Claims

1. Reduction gear **characterised by** the fact that it comprises a crown gear and worm screw first reduction stage and a second stage with an epicycloidal reduction group.

2. Reduction gear according to claim 1, **characterised by** the fact that said crown gear is idle fitted on the output shaft and is integral with a bushing gear, also fitted on the output shaft, engaging a plurality of planetary gears, said planetary gears being fitted on a flange integral with the output shaft and engaging a fixed crown gear, external, integral with the reduction gear box.

3. Gearmotor **characterised by** the fact that it comprises, fitted inside the same box:
an input shaft with a worm screw;
an output shaft at right angles to the preceding;
an idle crown gear on said output shaft engaging said worm screw;
a bushing with external toothing, integral with said crown gear;
a series of planetary gears engaging the toothing of said bushing and a crown gear, external, fixed and
integral with the box;
a support of said planetary gears integral with said output shaft.
